# EUROPEAN PATENT APPLICATION

(11) **EP 2 629 066 A1**
(43) Date of publication of application: **21.08.2013**
(21) Application number: 12005985.2
(22) Date of filing: 22.08.2012
(51) Int. Cl.: G01F 1/84

(54) **Coriolis mass flow meter and signal processing method for a Coriolis mass flow meter**

(30) Priority: 18.02.2012 EP 12001081
(71) Applicant: ABB Technology AG, 8050 Zürich (CH)
(72) Inventor: Drautz, Frank, 37083 Göttingen (DE)
(74) Representative: Partner, Lothar

(57) **Abstract**

The invention relates to the signal processing of a Coriolis mass flow measurement device. A new possibility is presented to enhance accuracy and robustness of Coriolis mass flow meters (CMFs) by using the complete information available from the modal spectrum of the measurement device in its signal evaluation algorithms. The superiority and generality of this technology is described and first hints for practically implementation are given.

## Description

The invention relates to a Coriolis mass flow meter, in short called a CMF, with one or more measuring tubes and with a meter electronics. The invention further relates to a signal processing method for a Coriolis mass flow meter with one or more measuring tubes and with a meter electronics.

As it is well known, the advantage of CMFs is that they are capable to measure mass flow rate, respectively the volume flow rate calculated with media density measured with the same device, not only with high accuracy, but also independent of most media properties. The latter is due to the fact that the measurement effect is directly proportional to the desired measurement value.

However, the Coriolis measurement principle will impose some restrictions for the functionality of such a device. As the complete mechanical system of the sensor of a CMF includes the medium of which the mass flow is to be measured, and is also affected by the environment, e.g. the mounting conditions, environmental conditions etc, the dynamic response of the complete mechanical sensor system will be different e.g. for two media with different density or viscosity, as these properties will change mass inertia or dissipation properties of the sensor, or at different temperatures, which may affect Young's modulus of the materials or lead to thermal induced stress.

The described effects will be reflected inevitably in the measured values and therefore reduce the accuracy of the CMF.

One possibility to deal with this problem in Coriolis flow measurement technology is to design a CMF in such a way, that the described effects will only have minor impact on his functionality. Obviously this may result in severe requirements for the design and construction of the CMF with resulting unfavourable consequences e.g. for mass and cost budget - and as it was pointed out, any design option can at most provide mitigation of this general problem.

A promising approach widely used in currents CMFs is therefore to analyse the impact of the medium properties and the complete environment on the measurement effect and correct it instantaneously.

Such a technology for CMFs is commonly known as online-diagnosis or adaptive/smart sensor electronics. The obvious advantage of this approach is not only that there are further possibilities to deal with the deficit of a given CMF, but it also follows a general trend in mechatronics, which consists in innovative combination of appropriate mechanical designs with intelligent signal processing algorithms.

Currently used in CMFs are different model-based signal processing technologies, which work with simplified mechanical models of the dynamic system. Typically, characteristic numbers or coupling constants derived from an underlying model are detected. Then the actual measured values are corrected with appropriate algorithms to compensate the assumed effects. Obviously, such an approach can always be only an approximation of the complexity of the real device with the resulting limitation for the achievable measurement accuracy.

The object of the present invention is to provide CMF with a novel signal processing technology with superior performance and highest possible degree of generality.

According to the invention, the accuracy and robustness of the measurement process performed in the CMF is enhanced by determining directly the relevant modal properties of the device during the measurement process and correcting the current measurement results adaptively with this values.

A CMF according to the invention has one or more measuring tubes and a meter electronics which is configured to perform a signal processing method, and the meter electronics is configured to determine directly the relevant modal properties of the device during the measurement process and to correct the current measurement results adaptively with this values, so that the accuracy and robustness of the measurement process performed by the Coriolis mass flow meter is enhanced.

The advantage of the CMF with the measurement process according to the invention is due to the fact that this inventive approach doesn't rely on simplified models, but uses the complete information which is available from the modal spectrum of the device.

Advantageous embodiments are described in the characteristic features of the dependent claims.

According to a preferred embodiment of the invention, the relevant modal properties of the device are directly determined by additionally exciting several different frequencies at least temporarily and evaluating the respective frequency responses.

According to a preferred embodiment of the invention, the correction is based on a comparison of the relevant modal properties of the current state with an initial or several different reference states, with the respective modal properties being stored in the transmitter.

According to a preferred embodiment of the invention, the determined modal properties are used to detect also secondary measurement quantities like e.g. thermal state of the sensor or viscosity of the measured medium.

According to a preferred embodiment of the invention, the meter electronics is configured to determine the relevant modal properties of the device directly by additionally exciting several different frequencies at least temporarily and evaluating the respective frequency responses.

According to a preferred embodiment of the invention, the meter electronics is configured to base the correction on a comparison of the relevant modal properties of the current state with an initial or several different reference states, with the respective modal properties being stored in the meter electronics.

According to a preferred embodiment of the invention, the meter electronics is configured to use the determined modal properties to detect also secondary measurement quantities like e.g. thermal state of the sensor or viscosity of the measured medium.

The invention will be described in greater detail by description of an embodiment with reference to the accompanying drawings, wherein
- Fig. 1: shows a measurement of 0-phase vs. frequency; in correlation with Eigenfrequencies from finite element analysis,
- Fig. 2: shows the measurement as in Figure 1; additionally with the sensor amplitude on a logarithmic scale shown on the right side,
- Fig. 3: shows the measurement of 0-phase vs. frequency in comparison of two demonstrators,
- Fig. 4: shows the measurement of 0-phase vs. frequency and the influence of density influence and boundary conditions, the latter chosen unfavourably for investigation purpose, for the same demonstrator as referred to in fig. 3.
- Fig. 5: shows a scheme of a Coriolis mass Flow meter according to the invention.

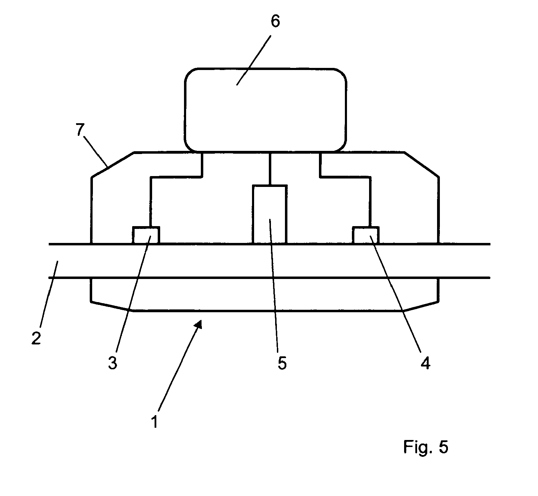

Figure 5 shows a scheme of a Corilois Mass Flow Meter, also called CMF, according to the invention. The CMF 1 has here one single straight measuring tube 2, through which the medium to be measured flows. It could of course also be a double-tube CMF, with straight or bent tube, the geometrical structure of which is basically known. On the tube 2, there is mounted, in a way which is basically known, an actuator 5 which induces a vibrational force on to the measuring tube 2. Two displacement sensors 3 and 4 are mounted, in a way basically known, upstream and downstream respectively of the actuator 5. The tube 2, sensors 3 and 4 and the actuator are covered by a protective housing 7. Fixed to the housing there is a meter electronics 6, also called transducer. The meter electronics is functionally connected to the actuator 5 and the sensors 3, 4. The meter electronics 6 is configured to perform a signal processing method, and the meter electronics 6 is configured to determine directly the relevant modal properties of the CMF 1 during the measurement process and to correct the current measurement results adaptively with this values, so that the accuracy and robustness of the measurement process performed by the Coriolis mass flow meter 1 is enhanced.

As it is well known, and can be proven mathematically, the dynamic response of a linear discrete multi-body system is completely determined by its modal spectrum. This holds also true for any real mechanical system which can be approximated by such a system, the exactitude follows of course from the achieved accuracy of the representation. Due to the typically very small deformation of Coriolis mass flow meters, also here called CMFs, the latter can be represented with any necessary accuracy by discrete linear systems, e.g. finite element formulation. This is even possible including the actual measuring effect. The Coriolis forces induced by mass flow combined with appropriate actuation simply leads to the case of a complex modal spectrum, i.e. a set of eigenmodes not only described by respective eigenfrequencies and magnitudes at all positions of the structure, but also by specific phase angles at different points of the device. It is also well known that the fact stated above also holds true for a complex modal spectrum.

As a CMF measures only the dynamic effect of mass flow - in most case simply the phase difference between two sensor positions induced by Coriolis effect, or often in practice more complicate so called 0-phase, which is the phase signal without corresponding mass flow - it is understandable that the measurement effect is also completely determined by the modal spectrum of the complete system, including here media and interaction with the environment.

Therefore it is sufficient for a correctly manufactured, sensible designed and mounted CMF to detect changes in the modal spectrum to be able to correct unwanted influences from media or environment effect on the measurement. The requirements noted here imply that the CMF can be represented with a linear model, which can be as complicated as necessary, e.g. a finite element model comprising millions of degree of freedoms, and that the mounting conditions do not dominate the device functionality. All off these requirements are standard for the usage of state of the art CMFs at the moment.

Intrinsic generation of 0-phase by a CMF device tolerances should serve as a first example for the application of the disclosed adaptive signal processing technology. Intrinsic refers here to typical manufacturing tolerances, which can not be avoided to a certain degree in any real system - obviously, an ideal CMF shouldn't exhibit any 0-phase at all.

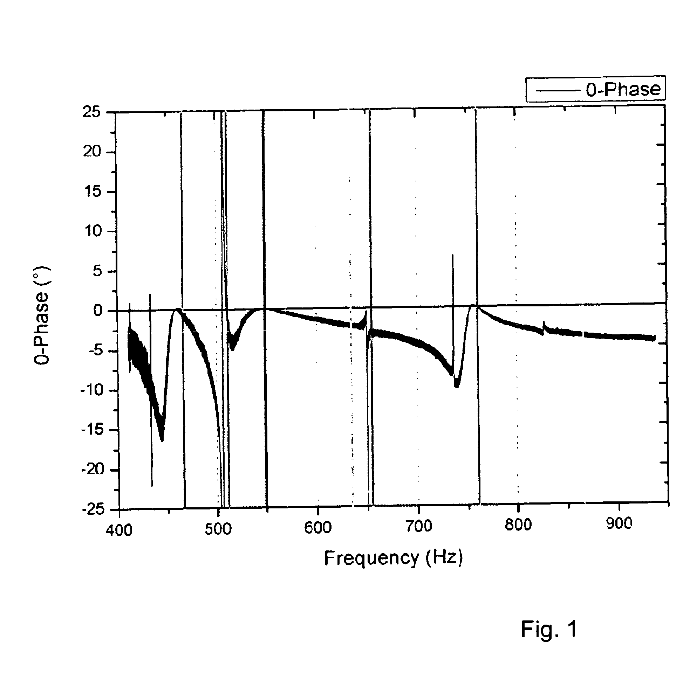

To illustrate this, in Figure 1 frequency response of a 0-phase measurement for a given CMF device is shown. For investigation purpose and to exclude other effects as far as possible, the measurement was conducted in, ideally symmetric, free boundary conditions and without any mass flow, the device was simply filled with air.

Additionally, eigenfrequency results from finite elements analysis of the design are plotted in the same graph. The terminology used here gives a classification with respect to the two sensors used in the device: the z-axis is parallel to the sensor axis, which is typically also the actuator axis, hence the modes designated as z-antisymmetric are modes with major displacement in direction of the z-axis and same magnitude in antiphase with respect to the two sensors. The z-symmetric modes show also major displacement in this direction, with same magnitude but without any phase-shift. The operation mode is part of this class. All other modes in this class are marked differently here. Finally, all other modes exhibiting displacement in antiphase at the sensor positions - but not dominantly in direction of z-axis - are also marked.

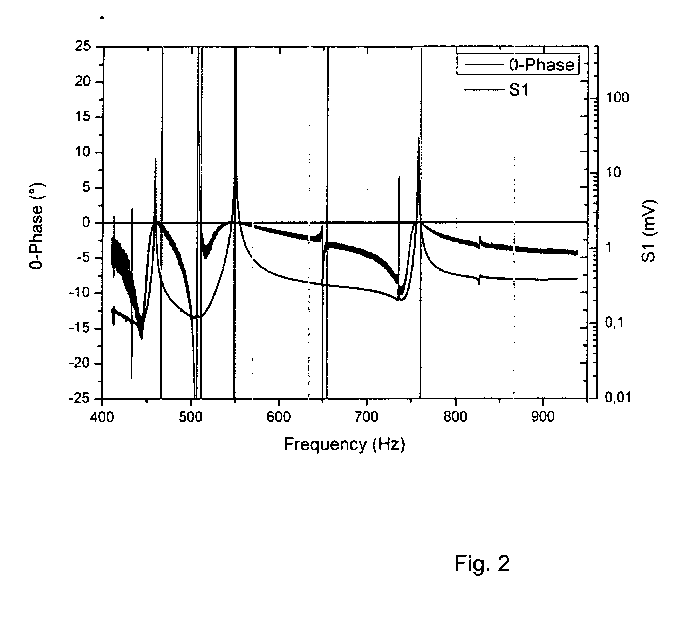

The correlation of the phenomena visible in measurement data and simulation results can be explained by the fact, that a simultaneous response of symmetric and antisymmetric modes leads to a nonvanishing 0-phase measurement even for zero mass flow, hence no Coriolis forces are present. As it can be observed, z-antisymmetric modes lead to increased 0-phase at their resonance frequency, with sign change due to phase change while excitation frequency is passing through resonance frequency. Z-symmetric modes lead to asymptotic behaviour of the 0-phase towards zero magnitude due to amplification of symmetric part. The latter observation is also illustrated by Figure 2, where in addition to the data already shown in Figure 1 also the magnitude of one of the two sensors is plotted.

It may be useful to remark at this point, that typically for different devices of the same design slightly different eigenfrequencies in the order of some few Hertz are measured - so the consistency of measurement and simulation data may be characterized as rather good.

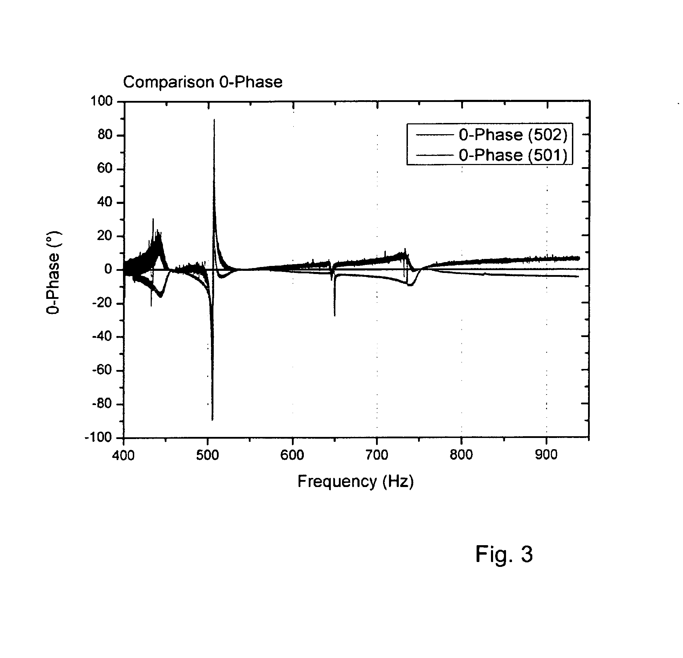

To give a further illustration of the phenomena described above as intrinsic generation of 0-phase, in Figure 3 measurement data for two different devices, but with the same design of course, is presented. It is obvious that the same phenomena correlated to the modal spectrum as shown in Figure 1 are visible for both devices - even with about the same magnitude. This is not surprising at all, as both devices have low arbitrary tolerances of the same order. Of course only the sign may be different. In the two measurements shown here, the same sign of 0-phase is only found around the first z-antisymmetric mode for the two compared devices.

The adaptive signal processing technology described in this invention takes now advantage of the fact - as pointed out above - that the dynamic response of a mechanical system is completely determined by the knowledge about the modal spectrum and the acting forces.

In the example given, the 0-phase at operational frequency is of interest, which is nothing other than the dynamic response of the system for a given excitation. To be able to determine the intrinsic generated 0-phase of the device, the knowledge of the modal properties of the relevant eigenmodes, i.e. respective natural frequency, modal damping and eigenshape as seen from the two sensors, combined with the modal projection of the excitation force is sufficient.

For a practical implementation, it is useful to recall, that the accuracy depends only on the exactitude with which the information from the modal spectrum of the device can be obtained with reasonable effort in normal operating conditions.

A possible approach may therefore be not to measure the complete 0-phase response, but only a small number of measurement points which are sufficient to determine the necessary properties of the relevant part of the modal spectrum. For example in the measurement shown in Figure 1, the effect of five eigenmodes is clearly observable. These modes may be characterized by only 15 different parameters, respectively eigenfrequency, modal damping and excitation, which can be determined with high accuracy from about only 50-100 measurement points. As also the dynamic response of the CMF at frequencies away from the operational frequency is important, these measurements could be done during standard operation of the device with appropriate combination of actuation signal and respective frequency filtering of response. As the Coriolis forces induced by the mass flow are typically several orders smaller than the actuation force used, the magnitude of the additional excitation may be chosen suitably small and will therefore not interact with the standard operation of the CMF.

Choosing the right characteristic measurement points helps to increase the exactitude of the determinations of the modal parameters, and also exclude e.g. measurement noise. This may be done by using some underlying analytical model. The appropriate analytical model is straightforward from the correlation of the phenomena visible in measurement data and simulation results. It is important to stress here that as this model is based on the actual measurement results, it incorporates no simplifications, but can rather be considered as some smoothing or fit of the measurement.

On the other hand an empiric approach based on evaluation of the characteristic properties of a specific design and use of appropriate algorithms may be used as an alternative. For the problem described in the next paragraph, it might even be sensible to combine the two described possibilities.

As it is well known, in most applications of CMFs, it is not of interest to determine an absolute value of the 0-phase, which can be corrected e.g. after production or installation of the device in the site, but detection of the change of the 0-phase during operation with the resulting loss of measurement accuracy is important.

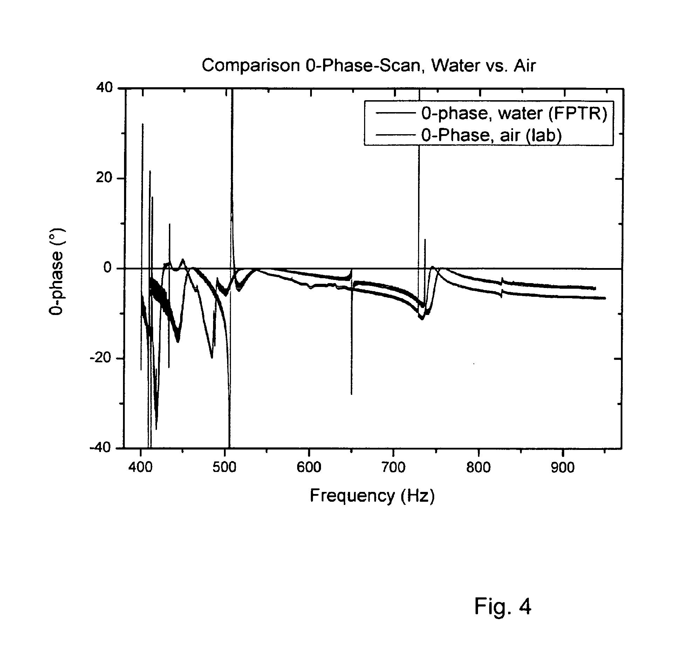

An example of such a situation is given in Figure 4. Here in addition to the measurement already shown in Figure 1, a second measurement is shown with the same device but now with water as media and mounted in deliberately unfavorable chosen conditions. Although the influence from the dynamic response of the environment is clearly visible, appropriate algorithms provided with the information from operation in different conditions should be able to sensibly mitigate the effect. Otherwise such measurement conditions would result in complete malfunction for a state of the art CMF.

For practical implementations of the invention presented here, a reasonably accurate diagnosis of this change is sufficient and can be used as valuable and affordable mitigation. Again it should be stressed that a possible loss of accuracy is not due to the invention, but only a result of the exactitude of the information obtained from the measurement and the signal processing algorithms implemented. Mostly these factors will depend on e.g. commercial considerations.

To conclude a combination of the two methods described above should give most efficient possibility to deal with this general CMF problem: on the one hand determine relevant modal properties with characteristic measurement points and use of an underlying analytical model, combined with on the other hand an empirical approach using suitable algorithms appropriate for the specific design and it's characteristic behaviour.

To gather the information necessary for these algorithms, a sort of calibration process can be implemented into the manufacturing process. It is even possible for each specific device, with respective unique combinations of tolerances, to train it in different situations, such as mounting conditions, media and environment properties such as fluid density and ambient temperature. With this process each device would be individually prepared to perform with highest possible accuracy under all possible conditions. Of course this might be a time-consuming process, but as the necessary measurement and evaluation facilities will be on board of each device anyway, the cost impact should not be considerable.

To complete the description of this invention, it is pointed out that the application given here should only serve as an example, but the presented invention is a lot more general also from this point of view.

As an example one will recall, that it is already well known that the accuracy of the density measurement, which is incorporated in each CMF to determine volume flow from mass volume measurement, can be substantially increased by not only using the frequency change induced by density of media by one eigenmode, typically the operational mode, as it is the case in most commercial available Coriolis mass flow meters at the moment, but also taking advantage of the frequency change of a second eigenmode. This concept can be extended to determine the density from the complete modal spectrum, whereby the only relevant part of the modal spectrum is here the part that depends on media density change. This will result again in the highest possible accuracy.

Two further examples are given now below. First is viscosity measurement: for CMF designs, in which there is no single mode, which depends strongly on viscosity, it should nevertheless be possible to determine the latter with high accuracy by using characteristic changes of relevant modes, e.g. quality factor and frequency change due to dissipation and rotational inertia effects. Temperature measurement may serve as second example: by using characteristic information about the change of the modal spectrum with temperature for a specific design, evaluating these changes with appropriate algorithms in a modal spectrum of a given CMF in operation should yield the current operational temperature. And even better, influences from temperature and externally induced stress may also be separated with this approach.

Obviously, this list can be extended to all physical quantities interacting with the modal spectrum of the device, which underlines again the generality of the invention presented here.

The technology described here is not only superior in performance over the state of the art, but obviously it is also the most general approach possible in the field of it's application.

The reason for this is that no simplifying models are used, but - relying on a deeper understanding of the device - the actual physical/dynamical behaviour is exploited in a sensible way.

An important feature is also the generality of the technology, which may make it possible, to enhance substantially several performance criteria of e.g. a CMF in parallel with the same hardware. For example, retrieving once the relevant change of the modal spectrum depending on environmental conditions can be exploited in parallel to increase 0-phase stability with temperature and density accuracy measurement. Additionally, one can also determine viscosity of the medium. The same measurement and hardware can be used for this, only suitable algorithms need to be implemented - which is no principal problem for the performance of today's Digital Signal Processors (DSP).

## Claims

1. Signal processing method for a Coriolis mass flow meter (1) with one or more measuring tubes (2) and a meter electronics (6), **characterised in that** the relevant modal properties of the device are directly determined during the measurement process and the current measurement results are adaptively corrected with these values so that the accuracy and robustness of the measurement process is enhanced.

2. Signal processing method according to claim 1, where the relevant modal properties of the CMF device (1) are directly determined by additionally exciting several different frequencies at least temporarily and evaluating the respective frequency responses.

3. Signal processing method according to claim 1, wherein the correction is based on a comparison of the relevant modal properties of the current state with an initial or several different reference states, with the respective modal properties being stored in the meter electronics (6).

4. Signal processing method according to claim 1 wherein the determined modal properties are used to detect also secondary measurement quantities like e.g. thermal state of the sensor or viscosity of the measured medium.

5. Coriolis mass flow meter (1) with one or more measuring tubes (2) and with a meter electronics (6) which is configured to perform a signal processing method, **characterised in that** the meter electronics (6) is configured to determine directly the relevant modal properties of the Coriolis mass flow meter device (1) during the measurement process and to correct the current measurement results adaptively with these values, so that the accuracy and robustness of the measurement process performed by the Coriolis mass flow meter (1) is enhanced.

6. Coriolis mass flow meter (1) according to claim 5, **characterised in that** the meter electronics (6) is configured to determine the relevant modal properties of the Coriolis mass flow meter device (1) directly by additionally exciting several different frequencies at least temporarily and evaluating the respective frequency responses.

7. Coriolis mass flow meter (1) according to claim 5, **characterised in that** the meter electronics (6) is configured to base the correction on a comparison of the relevant modal properties of the current state with an initial or several different reference states, with the respective modal properties being stored in the meter electronics (6).

8. Coriolis mass flow meter (1) according to claim 5, **characterised in that** the meter electronics (6) is configured to use the determined modal properties to detect also secondary measurement quantities like e.g. thermal state of the sensor or viscosity of the measured medium.
